(19) Europäisches Patentamt
European Patent Office
Office européen des brevets

(11) Veröffentlichungsnummer: **0 334 170 B1**

(12) # EUROPÄISCHE PATENTSCHRIFT

(45) Veröffentlichungstag der Patentschrift: **26.01.94**

(51) Int. Cl.[5]: **C08K 5/51**

(21) Anmeldenummer: **89104513.0**

(22) Anmeldetag: **14.03.89**

(54) **Fliessverbesserung für feststoffhaltige Polymere.**

(30) Priorität: **22.03.88 DE 3809521**

(43) Veröffentlichungstag der Anmeldung:
**27.09.89 Patentblatt 89/39**

(45) Bekanntmachung des Hinweises auf die Patenterteilung:
**26.01.94 Patentblatt 94/04**

(84) Benannte Vertragsstaaten:
**DE FR GB**

(56) Entgegenhaltungen:
**EP-A- 0 203 017**
**GB-A- 1 470 124**

(73) Patentinhaber: **BAYER AG**
**D-51368 Leverkusen(DE)**

(72) Erfinder: **Mazanek, Jan, Dr.**
**Haferkamp 2**
**D-5000 Köln 80(DE)**
Erfinder: **von Bonin, Wulf, Dr.**
**Droste-Hülshoff-Strasse 9**
**D-5068 Odenthal(DE)**
Erfinder: **von Gizycki, Ulrich, Dr.**
**Wiembachallee 24**
**D-5090 Leverkusen 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft Feststoffe enthaltende Polymere, die Umsetzungsprodukte von basischen Carbonsäureamiden mit Phospor enthaltenden Estern enthalten. Derartige Polymere weisen verbesserte Fließeigenschaften auf.

Zur Verbesserung der Fließeigenschaften von Feststoffen, z.B. Füllstoffe, enthaltenden Polymeren, z.B. Thermoplasten, Elastomeren oder Duroplasten, werden gemäß dem Stand der Technik Wachse, Fettsäuren, Fettsäuresalze, Fettsäureester, Fettsäureamide, ethoxylierte Alkohole, Amine, Öle oder Polymere, z.B. Essigsäureester, eingesetzt (siehe GB-PS 1 470 124 und EP-OS 203 017).

Die Fließeigenschaften von füllstoffhaltigen Polymerisaten lassen sich auch durch Oberflächenmodifizierung der Füllstoffe verbessern. So kann man die Füllstoffe mit Titansäureestern umsetzen oder silanisieren und so die Einarbeitung in Polymere und die Verarbeitung der füllstoffhaltigen Polymere erleichtern.

Auch bei der Herstellung von Dispersionen, die Pigmente in Lackzubereitungen oder in Polymeren enthalten, können verschiedene Dispergiermittel, z.B. solche auf der Basis von Polyacrylsäurederivaten oder Polyurethanpolymeren, eingesetzt werden (siehe GB-PS 1 393 402 und US-PS 4 029 861).

Die Erhöhung des Feststoffgehaltes von Feststoffe enthaltenden Polymeren oder von Pigmentzubereitungen führt zu einer überproportionalen Erhöhung der Viskosität und dadurch zu einer Verschlechterung der Verarbeitbarkeit. Der Einsatz von bekannten Fließverbesserern oder Oberflächenmodifikatoren, z.B. der obengenannten Fettsäurederivate, führt nicht zu befriedigenden Ergebnissen.

Es wurden nun Feststoffe enthaltende Polymere gefunden, die dadurch gekennzeichnet sind, daß sie zusätzlich Umsetzungsprodukte aus einem Mol basischem Carbonsäureamid mit 0,1 bis 3 Molen Phosphor enthaltendem Ester enthalten, wobei es sich bei den Phosphor enthaltenden Estern um Ester der Ortho-, Pyro-, Meta- und Polyphosphorsäure, sowie um Ester der verschiedenen Phosphinsäuren und Phosphonsäuren, z.B. der Aryl- und Alkylphosphonsäuren handelt. Die Ester können sich beispielsweise von geradkettigen oder verzweigten gesättigten Alkoholen mit 1 bis 18 C-Atomen, aber beispielsweise auch von aromatischen, araliphatischen und/oder gemischt aromatisch-aliphatischen Alkoholen, jeweils mit 6 bis 18 C-Atomen, ableiten. Vorzugsweise leiten sie sich von geradkettigen oder verzweigtkettigen gesättigten Alkoholen mit 1 bis 18 C-Atomen ab, besonders bevorzugt von solchen mit 1 bis 4 C-Atomen. Bevorzugte Phosphor enthaltende Ester sind die Alkylester, insbesondere die Methyl- und Ethylester von Orthophosphorsäure und Alkylphosphonsäuren, insbesondere von Methylphosphonsäure.

Im Rahmen der vorliegenden Erfindung kommen als basische Carbonsäureamide beispielsweise basische Amide von aliphatischen Mono-, Di- und/oder Polycarbonsäuren in Frage. Bevorzugt sind basische Carbonsäureamide von Monocarbonsäuren mit 9 bis 31 C-Atomen, insbesondere mit 12 bis 24 C-Atomen, die gegebenenfalls im Gemisch mit basischen Amiden von Adipinsäure und/oder Dimer-und/oder Trimerfettsäuren vorliegen können, z.B. dimerisierter Ölsäure.

Die den basischen Carbonsäureamiden zugrundeliegenden Carbonsäuren, bei denen es sich auch um ein Gemisch von Carbonsäuren handeln kann, besitzen vorzugsweise Schmelzpunkte von unter 50 °C. Besonders bevorzugt handelt es sich um Ölsäure, Elaidinsäure, Isostearinsäure, Tallölfettsäure, Rizinolsäure, Sojaölfettsäure, Rapsölfettsäure, Fischölfettsäuren oder Linolölfettsäure, ganz besonders bevorzugt um Ölsäure und Ölsäure enthaltende Fettsäuregemische, insbesondere solche von natürlicher Herkunft.

Bei den basischen Carbonsäureamiden kann es sich um Mono-, Bis- und/oder Polyamide handeln. Monoamide können im allgemeinen durch Umsatz von einem Mol Fettsäure mit einem Mol primärem Amin erhalten werden, Bisamide durch Umsatz von zwei Mol Carbonsäure mit einem Mol eines Amins, das mindestens zwei primäre Aminogruppen enthält.

Basische Carbonsäureamide zeichnen sich dadurch aus, daß sie neben einer oder mehreren Amidgruppen pro Molekül noch mindestens eine Aminogruppe enthalten, die als primäre, sekundäre und/oder tertiäre Aminogruppe vorliegen kann. Basischen Carbonsäureamiden liegen also Amine mit mindestens zwei primären Aminogruppen oder mit mindestens einer primären und mindestens einer sekundären oder tertiären Aminogruppe zugrunde. Die Amine können aliphatisch, araliphatisch oder aromatisch sein. Aliphatische Amine sind bevorzugt. Beispielsweise können sich geeignete basische Carbonsäureamide von Aminen der Formel (I) ableiten.

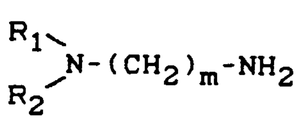

(I),

in der

$R_1$ und $R_2$ unabhängig voneinander für einen aliphatischen Alkylrest mit 1 bis 8 C-Atomen oder Wasserstoff und

m für eine ganze Zahl von 0 bis 6 stehen.

Vorzugsweise steht in Formel (I) m für 2 oder 3.

Geeignete basische Carbonsäureamide können sich auch von Polyalkylenpolyaminen der Formel (II) ableiten

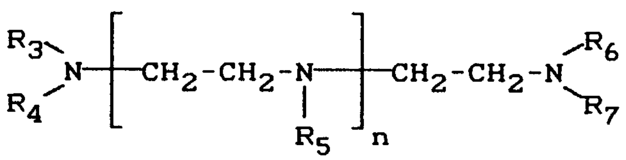

(II),

in der

$R_3$, $R_4$, $R_5$, $R_6$ und $R_7$ unabhängig voneinander jeweils für Wasserstoff, einen gegebenenfalls substituierten aliphatischen Rest mit 1 bis 30 C-Atomen oder einen gegebenenfalls substituierten aromatischen Rest mit 6 bis 10 C-Atomen und

n für Null oder eine ganze Zahl von 1 bis 50 stehen.

Bevorzugte Polyalkylenpolyamine sind dabei Polyethylen- und/oder Polypropylenpolyamine mit z.B. 3 bis 6 N-Atome. Derartige Polyalkylenpolyamine können auch höhere N-Gehalte aufweisen, wie sie bisweilen in technisch hergestellten Polyalkylenpolyamin-Gemischen vorkommen. Bei den Aminen kann es sich selbstverständlich auch um Gemische handeln, beispielsweise aus Diethylentriamin und Ethylendiamin oder aus Triethylentetramin, Tetraethylenpentamin und Pentaethylenhexamin.

Basische Carbonsäureamide können gemäß dem Stand der Technik hergestellt werden, beispielsweise durch Erhitzen von Carbonsäure und Amin, gegebenenfalls unter Schutzgas, auf Temperaturen von z.B. 150 bis 200 °C und Abdestillieren des Reaktionswassers. Bei der Herstellung der basischen Carbonsäureamide muß das Verhältnis von Carbonsäure zu Amin nicht streng stöchiometrisch gewählt werden. Es können auch stöchiometrische Unterschüsse und, vorzugsweise, Überschüsse an Carbonsäure bezogen auf primäre Aminogruppen im Ausgangsamin angewendet werden. Beispielsweise können solche Überschüsse bis zu 150 Mol-% betragen, vorzugsweise liegen diese Überschüsse im Bereich 1 bis 50 Mol-%.

Die erfindungsgemäßen Umsetzungsprodukte aus Phosphor enthaltenden Estern und basischen Carbonsäureamiden können hergestellt werden durch Erhitzen der Komponenten, gegebenenfalls unter einem Schutzgas, wie Stickstoff, auf Temperaturen im Bereich von 80 bis 220 °C, vorzugsweise 120 bis 180 °C. Die Umsetzung kann beispielsweise nach 0,5 bis 5 Stunden beendet werden. Wenn man bei relativ tiefer Temperatur schonend arbeiten will, können auch längere Reaktionszeiten angewendet werden. Anschließend können gegebenenfalls noch vorhandene flüchtige Komponenten entfernt werden, z.B. durch Destillation, Vakuumdestillation, Wasserdampfdestillation oder durch Hindurchblasen eines möglichst inerten Gases, beispielsweise Kohlendioxid, Stickstoff oder Luft. Zum Entfernen flüchtiger Komponenten können z.B. Temperaturen zwischen 20 und 220 °C angewendet werden. Vorzugsweise entfernt man flüchtige Komponenten bei 80 bis 180 °C und während der Reaktion.

Das Verhältnis von basischem Carbonsäureamid zu Phosphor enthaltendem Ester beträgt vorzugsweise 0,2 bis 1 Mol Phospor enthaltender Ester pro Mol basischem Carbonsäureamid.

Bevorzugte Umsetzungsprodukte von basischen Carbonsäureamiden mit Phosphor enthaltenden Estern sind bei Temperaturen von 20 °C und höher flüssig, schmalzartig oder wachsartig. Insbesondere wenn die Umsetzungsprodukte sich von basischen Carbonsäureamiden herleiten, die aus Amingemischen und/oder Carbonsäuregemischen erhalten worden sind, haben sie schmalzartigen oder wachsartigen Charakter und keine definierten Schmelzpunkte. Besonders bevorzugte Umsetzungsprodukte haben bei 50 °C eine Viskosität im Bereich 50 bis 4.000 mPa.s.

Die Umsetzungsprodukte von basischen Carbonsäureamiden mit Phosphor enthaltenden Estern können auf verschiedene Weise mit den Feststoffen und/oder Polymeren zusammengebracht werden. Beispielsweise kann man sie vor der Einarbeitung der Feststoffe in das jeweilige Polymer den Polymeren, deren Ausgangskomponenten oder deren Lösungen zumischen. Man kann sie auch auf die Feststoffe aufbringen, z.B. während deren Herstellung oder Finishprozesses, aber auch bei einer Vorbehandlung, die vor dem Einarbeiten der Feststoffe in das jeweilige Polymer stattfindet. Geeignete Einbringtechniken sind beispielsweise beschrieben in DE-OS 2 152 485, EP-OS 154 678, GB-PS 1 228 538 und US-PS 4 073 766.

Vorzugsweise bringt man die erfindungsgemäß einzusetzenden Umsetzungsprodukte zunächst mit dem jeweiligen Feststoff zusammen und arbeitet den so vorbehandelten Feststoff dann in das jeweilige Polymer ein.

Die Umsetzungsprodukte basischer Carbonsäureamide mit Phosphor enthaltenden Estern können beispielsweise in Mengen von 0,1 bis 30 Gew.-%, bezogen auf den Feststoff, eingesetzt werden. Vorzugsweise beträgt diese Menge von 0,2 bis 15 Gew.-%, besonders bevorzugt von 0,3 bis 6 Gew.-%. Mann kann die erfindungsgemäß einzusetzenden Umsetzungsprodukte als solche oder in Form von Lösungen oder Konzentraten anwenden. Vorzugsweise wendet man sie in Form von Schmelzen oder Lösungen an. Die Lösungen können z.B. 1 bis 99 Gew.-% der Umsetzungsprodukte enthalten. Vorzugsweise enthalten sie 30 bis 75 Gew.-% der Umsetzungsprodukte. Als Lösungsmittel können beispielsweise die Carbonsäure, die dem jeweiligen Umsetzungsprodukt eines basischen Carbonsäureamids mit einem Phosphor enthaltenden Ester zugrundeliegt, oder übliche Lösungsmittel mit einem Siedepunkt im Bereich 50 bis 200 °C, z.B. Xylol oder Butylacetat, verwendet werden. Sie erleichtern die Einarbeitung von Feststoffen in Polymere und verbessern die Fließeigenschaften der erhaltenen Compounds.

Das Aufbringen der erfindungsgemäß einzusetzenden Umsetzungsprodukte auf Feststoffe kann nach an sich bekannten Verfahren stattfinden. So können z.B. Feststoffe mit diesen Umsetzungsprodukten in einem mechanischen Mischer (z.B. Hentschel-Mischer) intensiv verrührt werden, Ebenso ist es möglich, sie bei der Mahlung der Feststoffe dem Mahlgut zuzusetzen. Die erfindungsgemäß einzusetzenden Umsetzungsprodukte können auch in Lösungsmitteln aufgelöst und als Lösung mit den Feststoffen, gegebenenfalls unter Einsatz hoher Scherkräfte, vermischt werden. Das Lösungsmittel kann gegebenenfalls anschließend auf einfache Weise wieder abgetrennt werden. Es können hierbei z.B. verschiedenartige organische Lösungsmittel verwendet werden, wie Alkohole, Ketone, Ester, chlorierte Kohlenwasserstoff und/oder Aromaten. Soweit die Umsetzungsprodukte aus basischen Carbonsäureamiden und Phosphor enthaltenden Estern wasserlöslich oder wasserdispergierbar sind, ist deren Einsatz im Gemisch mit Wasser bevorzugt, da so eine besonders umweltfreundliche Arbeitsweise möglich ist.

Erfindungsgemäße Feststoffe enthaltende Polymere können beispielsweise Füllstoffe und/oder Pigmente enthaltende Polymere sein. Solche Polymere sind universell einsetzbar. Man kann in ihnen auch höhere Feststoffkonzentrationen bei unveränderter Fließfähigkeit realisieren.

Die erfindungsgemäßen Feststoffe enthaltenden Polymeren können Feststoffe beliebiger Art und Zusammensetzung enthalten. Diese Feststoffe können organischer oder anorganischer Natur sein. Insbesondere handelt es sich dabei um Füllstoffe und/oder Pigmente. Beispiele für solche Feststoffe sind Carbonate wie Kreide oder Dolomit, Silikate wie Talkum, Kaolin, Glimmer oder Wollastonit, Siliciumdioxid, Aluminiumoxid, Aluminiumoxidtrihydrat, Ruß, Graphit, Kohle, Nußschalen-, Stroh-, Fruchtkern- und Holzmehl, Glasfasern, Glaskugeln, Glaspulver, Gesteinsmehl, Hohlglaskugeln, Fasern wie Kohlenstoff-, Polymer- oder Metallfasern, Siliciumcarbid, Siliciumnitrid, Pulver für die Keramikherstellung, wie Keramocarbide, -boride, -nitride und -oxide, Aluminiumtitanat, Molybdänsulfid, Zinksulfid, Zinkoxid, organische und/oder anorganische Pigmente, Metalloxide, Metallpulver, metallisierte Füllstoffe wie metallisierte Fasern, Flugasche, Mikroballons, Titandioxid, Zemente, Magnesiumoxid, Magnesiumhydroxid, Bor und/oder Silicium.

Die Feststoffe können amorph oder kristallin sein, massiv, porös oder Hohlkörper und z.B. die Gestalt von Pulvern, Kugeln, Plättchen, Nadeln, Hanteln oder Fasern besitzen. Sofern es sich um pulverförmige Feststoffe handelt haben diese vorzugsweise eine mittlere Korngröße im Bereich von 0,0001 bis 1500 $\mu$, besonders bevorzugt im Bereich 0,1 bis 500 $\mu$.

Die Feststoffe können in Mengen von beispielsweise 0,1 bis 99 Gew.-%, bevorzugt von 0,5 bis 85 Gew.-%, besonders bevorzugt von 30 bis 80 Gew.-%, jeweils bezogen auf Füllstoffe und Zusätze enthaltendes Polymer, vorliegen. Es können auch mehrere Feststoffe nebeneinander vorliegen, z.B. Titandioxid und ein Pigment oder eine Kombination aus Glaskugeln und Glasfasern.

Die erfindungsgemäßen, Feststoffe enthaltenden Polymere können beliebige natürliche und/oder synthetische, nieder- und/oder hochmolekulare Polymere enthalten. Beispiele für Polymere sind Olefin- und Polyolefin-Homo- und -Copolymerisate wie Polyethylene, Polypropylene, Polybutene und Polyisobutylene, Polyvinylchloride, Ethylen-Vinylacetat-Polymere, Ethylen-Ethylacrylat-Polymere, Ethylen-Vinylchlorid-Polymere, Ethylen-Propylen-Polymere, fluorhaltige Polymere, Polyacetale, Polystyrole, Styrol-Copolymerisate, aromatische, aliphatische und/oder gemischte Polyester, Polyamide, Polyimide, Polyether, Polycarbonate, Polyurethane, Polyacrylate, Polyphenylenoxide, Polysulfide wie Polyphenylensulfid, Polypropylensulfide, Polysulfone, Celluloseester, Aminoplaste, Phenolplaste, Epoxidharze und/oder Alkydharze. Sie können sowohl in Substanz als auch in Lösungen eingesetzt werden. Die Polymere können gegebenenfalls weitere Zusätze wie zusätzliche Plastifizierungsmittel, Antioxidantien, Trennmittel, Wachse oder andere Polymeradditive enthalten, wie sie z.B. in Kapitel XIV von E.W. Flick, Plastics Additives, Noyes Publications, Park Ridge, New Jersey (1986) beschrieben sind. Es können auch Polymergemische, Blends, Copolymere,

Pfropfpolymere und statistische Mischpolymere aus zwei oder mehr der vorgenannten Typen zum Einsatz gelangen. Bei den Polymeren und/oder Polymergemischen kann es sich beispielsweise um Thermoplaste, Elastomere oder Duroplaste handeln.

Die erfindungsgemäß einzusetzenden Umsetzungsprodukte von basischen Carbonsäureamiden mit Phosphor enthaltenden Estern können nicht nur den Polymeren als solche, sondern auch Vorstufen davon, z.B. den Monomeren, zugesetzt werden.

Die erfindungsgemäßen feststoffhaltigen Polymere haben eine erniedrigte Viskosität. Dies hat zur Folge, daß entweder unter deutlich milderen Verarbeitungsbedingungen, wie Temperatur oder Druck gearbeitet werden kann oder, daß unter Beibehaltung der Verarbeitungsparameter ein höherer Feststoffgehalt der feststoff-haltigen Polymere erreicht werden kann. In beiden Fällen führt der Einsatz der erfindungsgemäßen Umsetzungsprodukte zu technischen und wirtschaftlichen Vorteilen.

Die Wirksamkeit erfindungsgemäßer Zusätze zu feststoffhaltigen Polymeren kann nach verschiedenen Verfahren bestimmt werden. So kann z.B. die Erniedrigung der Viskosität der Reaktionsgemische von füllstoffhaltigen Duroplasten vor dem Aushärten gemessen werden. Bei Thermoplasten kann z.B. die Erniedrigung des Druckes bei der Spritzgußverarbeitung oder die Verbesserung der Fließfähigkeit durch Ausmessen einer Flachspirale bestimmt werden.

Eine einfache und mit der Praxis korrelierende Methode zur Beurteilung der fließverbessernden Wirkung der erfindungsgemäße Feststoffe enthaltenden Polymeren ist die Bestimmung der Viskosität von Modelldispersionen, z.B. von Kreide, Talkum, Kaolin oder Dolomit in Testflüssigkeiten wie Dioctyl- oder Diethylphthalat. Der Vorteil solcher Messungen liegt einerseits in der einfachen und schnellen Durchführbarkeit, andererseits in der weitgehend universellen Gültigkeit der Ergebnisse für verschiedene Polymere. Dadurch können diese Ergebnisse gut auf praktische Polymersysteme übertragen werden.

Die vorliegende Erfindung betrifft weiterhin ein Verfahren zur Modifizierung von Feststoffe enthaltenden Polymeren, das in einer besonderen Ausführungsform dadurch gekennzeichnet ist, daß man zunächst 1 Mol eines oder mehrerer basischer Carbonsäureamide der weiter oben beschriebenen Art mit 0,1 bis 3 Molen Phosphor enthaltenden Estern aus der Gruppe der Ester der Orthophosphorsäure, Pyrophosphorsäuren, Metaphosphorsäure, Polyphosphorsäuren, Phosphinsäuren und Phosphonsäuren, auf 80 bis 200 °C erhitzt, das dabei erhältliche Umsetzungsprodukt, gegebenenfalls in gelöster oder dispergierter Form mit einem Feststoff der weiter oben beschriebenen Art zusammenbringt und den so behandelten Feststoff in einer Menge von 0,1 bis 99 Gew.-%, vorzugsweise 0,5 bis 85 Gew.-%, bezogen auf Füllstoffe und Zusätze enthaltendes Polymer, mit einem Polymer der weiter oben beschriebenen Art vermischt.

Die nachfolgenden Beispiele erläutern die Erfindung.

## Beispiele

Soweit Teile angegeben sind beziehen sie sich auf das Gewicht.

I. Beispiel betreffend die Herstellung von Umsetzungsprodukten aus basischen Carbonsäureamiden und Phosphor enthaltenden Estern.

### Beispiel 1

a) 565 Teile Sojaölfettsäure wurden in einem Kessel vorgelegt und 134 Teile eines Gemisches aus 40 Teilen Triethylentriamin, 30 Teilen Tetraethylenpentamin und 30 Teilen höheren Polyethylenpolyaminen (technisches Gemisch, mittleres Molekulargewicht 200) zugesetzt. Unter Stickstoff und gutem Rühren wurde 6 Stunden auf 175 °C erhitzt und dabei flüchtige Komponenten abdestilliert. Anschließend wurden bei 150 °C 173 Teile Dimethylmethylphosphonat hinzugesetzt und für 2 Stunden bei 150 °C belassen. So wurde ein bei Raumtemperatur schmalzartiges Umsetzungsprodukt erhalten, das bei 50 °C eine Viskosität von 710 mPa.s aufwies.

b) Wurden der Sojaölfettsäure noch 283 Teile Ölsäure hinzugefügt, so ergab sich ein bei Raumtemperatur flüssiges Umsetzungsprodukt.

### Beispiel 2

a) Es wurde wie bei Beispiel 1 gearbeitet, jedoch anstelle von Dimethyl-methylphosphonat wurden 255 Teile Triethylphosphat verwendet. Es wurde ein bei Raumtemperatur schmalzartiges Umsetzungsprodukt erhalten.

b) Wurden der Sojaölsäure noch 283 Teile Ölsäure hinzugefügt, ergab sich ein bei Raumtemperatur gießfähiges Umsetzungsprodukt.

Beispeil 3

283 Teile Ölsäure von technischer Qualität wurden in einem Kessel vorgelegt. Dann wurden 104 Teile 1-Dimethylamino-propylamin-3 hinzugefügt. Unter Abdestillieren der flüchtigen Komponenten wurde unter Stickstoff 6 Stunden auf 175 °C erhitzt. Dann wurde auf 100 °C abgekühlt, 37 Teile Dimethyl-methylphosphonat zugesetzt und unter Rühren 2 Stunden auf 150 °C erhitzt. Anschließend wurde 20 Minuten lang ein kräftiger Stickstoffstrom zum Austreiben der flüchtigen Bestandteile durch den Ansatz geblasen. Es wurde ein bei Raumtemperatur flüssiges Umsetzungsprodukt erhalten.

Beispiel 4

1128 Teile Ölsäure (technischer Qualität) wurden mit 347 Teilen N-Dimethyl-propylendiamin-1,3 verrührt und 6,5 Stunden bei 175 °C unter Abdestillieren der flüchtigen Komponenten erhitzt. Dann wurde auf 150 °C abgekühlt und mit 150 Teilen Dimethyl-methylphosphonat versetzt und 2 Stunden bei dieser Temperatur gerührt. Es wurde ein bei 22 °C flüssiges Reaktionsprodukt erhalten.

Beispiel 5

1464 Teile eines Amids, das aus 2 Mol Ölsäure (technische Qualität) und 0,67 Mol des in Beispiel 1 verwendeten Amingemisches analog zu Beispiel 1 hergestellt worden war, wurden mit 150 Teilen Dimethyl-methylphosphonat 2 Stunden bei 150 °C umgesetzt. Es wurde ein bei 35 °C flüssiges Produkt erhalten, das bei 20 °C eine schmalzartige Konsistenz aufwies.

Beispiel 6

1128 Teile technische Ölsäure wurden mit 410 Teilen N-Dimethyl-propylendiamin-1,3 unter Rühren 6 Stunden lang auf 175 °C erhitzt, wobei flüchtige Komponenten abdestilliert wurden. Dann wurden 120 Teile Dimethyl-methylphosphonat zugesetzt und noch 2 Stunden bei 150 °C gerührt. Es wurde ein bei 20 °C flüssiges Reaktionsprodukt erhalten.

II. Beispiele betreffend Umsetzungsprodukte aus basischen Carbonsäureamiden und Phosphor enthaltenden Estern und Feststoffe enthaltende Polymere

Beispiel A:

1000 g Kaolin des Typs Polarite® 102 A der Fa. ECC wurden in einem Rührgefäß mit 10 g der Verbindung hergestellt gemäß Beispiel 2 und 2000 g Methylenchlorid bei Raumtemperatur bei 400 U/Min. 60 Minuten lang vermischt. Danach wurde das Methylenchlorid im Vakuum abdestilliert.

Das erhaltene Produkt wurde zu 1330 g Epoxidharz (Basis Epichlorhydrin und Amin und vermischt mit einem Härter auf der Basis eines Carbonsäureanhydrids) bei 60 °C unter Rühren zugegeben. Es wurde 60 Minuten bei 2000 U/Min. nachgerührt und dann die Viskosität der Dispersion mit einem Haake-Viskosimeter RV 100, Meßkörper MV II P, gemessen. Es wurde ein gut fließendes Gemisch mit einer scheinbaren Viskosität bei 440 $S^{-1}$ von 470 m Pa.s erhalten (gemessen bei 60 °C). Die Dispersion, die analog hergestellt wurde, jedoch mit Zugabe von Stearinsäure anstelle der Verbindung aus Beispiel 2, besaß bei 440 $S^{-1}$ eine Viskosität von 600 m Pa.s.

Beispiel B:

Es wurde wie im Beispiel A beschrieben gearbeitet, jedoch mit 10 g der Verbindung hergestellt gemäß Beispiel 1a). Die erhaltene Dispersion besaß bei 440 $S^{-1}$ eine scheinbare Viskosität bei 60 °C von 460 m Pa.s.

Beispiel C:

Es wurde wie in Beispiel A beschrieben gearbeitet, jedoch mit 10 g der Verbindung hergestellt gemäß Beispiel 3. Die scheinbare Viskosität der erhaltenen Dispersion betrug bei 60 °C und 440 $S^{-1}$ 480 m Pa.s.

Beispiel D:

Es wurde wie im Beispiel A beschrieben gearbeitet, jedoch mit 10 g der Verbindung hergestellt gemäß Beispiel 4. Die Viskosität der Dispersion betrug, gemessen unter gleichen Bedingungen wie bei Beispiel C 430 m Pa.s.

Beispiel E:

Je 2,25 g Verbindungen hergestellt gemäß den Beispielen 1 bis 4 und 6 wurden in 273 g Dioctylphthalat gelöst. Zu dieser Lösung wurden 225 g Kaolin des gleichen Typs wie in Beispiel A portionsweise zugegeben und die entstandene Dispersion 60 Minuten bei Raumtemperatur gerührt. Anschließend wurden die scheinbaren Viskositäten bei 200 $S^{-1}$ gemessen (Haake-Viskosimeter RV 100, Meßkörper MV II P, 23 °C). Die nachfolgende Tabelle 1 zeigt die Meßergebnisse:

Tabelle 1

| Verbindung gemäß Beispiel | scheinbare Viskosität (m Pa.s) |
|---|---|
| 1 | 640 |
| 2 | 690 |
| 3 | 670 |
| 4 | 720 |
| 6 | 700 |
| als Vergleich Isopropyl-tristearyl titanat | 770 |

Beispiel F:

Es wurde wie im Beispiel E verfahren, jedoch wurde das Kaolin zunächst mit Verbindungen hergestellt gemäß Beispielen 1 bis 4 wie in Beispiel A beschrieben vorbehandelt und dann das so vorbehandelte Kaolin in Dioctylphthalat dispergiert. Die Meßergebnisse gehen aus Tabelle 2 hervor.

Tabelle 2

| Verbindung gemäß Beispiel | scheinbare Viskosität (m Pa.s) |
|---|---|
| 1 | 550 |
| 2 | 630 |
| 3 | 600 |
| 4 | 500 |

Beispiel G:

Zu Lösungen aus je 3,25 g der Verbindungen hergestellt gemäß Beispielen 2, 3 und 5 in 172 g Dioctylphthalat wurden portionsweise unter Rühren 325 g Calciumcarbonat (Typ Milicarb® der Fa. Omya) zugegeben. Die entstandenen Dispersionen wurden bei Raumtemperatur 60 Minuten nachgerührt und ihre scheinbare Viskosität in einem Haake-Viskosimeter bei 200 $S^{-1}$ bei 23 °C und mit Meßkörper MV II P gemessen. Die Ergebnisse sind in Tabelle 3 aufgeführt.

Tabelle 3

| Verbindung gemäß Beispiel | scheinbare Viskosität (m Pa.s) |
|---|---|
| 2 | 720 |
| 3 | 770 |
| 5 | 820 |
| als Vergleich: | |
| Stearinsäure (1 %, fest/fest) | 1130 |
| Ölsäure (1 %, fest/fest) | 970 |

**Patentansprüche**

1. Feststoffe enthaltende Polymere, dadurch gekennzeichnet, daß sie zusätzlich Umsetzungsprodukte aus 1 Mol basischem Carbonsäureamid mit 0,1 bis 3 Molen Phosphor enthaltendem Ester enthalten, wobei es sich bei den Phosphor enthaltenden Estern um Ester der Orthophosphorsäure, Pyrophosphorsäuren, Metaphosphorsäure, Polyphosphorsäuren, Phosphinsäuren und/oder Phosphonsäuren handelt.

2. Feststoffe enthaltende Polymere gemäß Anspruch 1, dadurch gekennzeichnet, daß die Phosphor enthaltenden Ester sich von geradkettigen oder verzweigten Alkoholen mit 1 bis 18 C-Atomen und/oder von aromatischen, araliphatischen und/oder gemischt aromatisch-aliphatischen Alkoholen mit 6 bis 18 C-Atomen ableiten.

3. Feststoffe enthaltende Polymere gemäß Ansprüchen 1 und 2, dadurch gekennzeichnet, daß es sich bei den basischen Carbonsäureamiden um solche von Monocarbonsäuren mit 9 bis 31 C-Atomen handelt.

4. Feststoffe enthaltende Polymere gemäß Ansprüchen 1 bis 3, dadurch gekennzeichnet, daß es sich bei den basischen Carbonsäureamiden um solche handelt, die neben einer oder mehreren Amidgruppen pro Molekül noch mindestens eine primäre, sekundäre und/oder tertiäre Aminogruppe enthalten.

5. Feststoffe enthaltende Polymere gemäß Ansprüchen 1 bis 4, dadurch gekennzeichnet, daß sich die basischen Carbonsäureamide von Aminen der Formel (I)

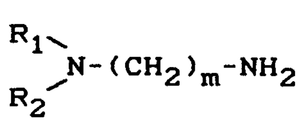

(I)

in der

| | |
|---|---|
| $R_1$ und $R_2$ | unabhängig voneinander für einen aliphatischen Alkylrest mit 1 bis 8 C-Atomen oder Wasserstoff und |
| m | für eine ganze Zahl von 0 bis 6 stehen, |

oder von Polyalkylenpolyaminen der Formel (II) mit mindestens eine primären Aminogruppe ableiten

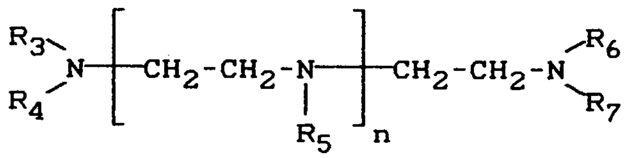 (II),

in der

| | |
|---|---|
| $R_3$, $R_4$, $R_5$, $R_6$ und $R_7$ | unabhängig voneinander jeweils für Wasserstoff, einen gegebenenfalls substituierten aliphatischen Rest mit 1 bis 30 C-Atomen oder einen gegebenenfalls substituierten aromatischen Rest mit 6 bis 10 C-Atomen und |
| n | für Null oder eine ganze Zahl von 1 bis 50 stehen. |

6. Feststoffe enthaltende Polymere gemäß Ansprüchen 1 bis 5, dadurch gekennzeichnet, daß es sich bei den Feststoffen um Carbonate, Silikate, Siliciumdioxid, Aluminiumoxid, Aluminiumoxidtrihydrat, Ruß, Graphit, Kohle, Nußschalen-, Stroh-, Fruchtkern- oder Holzmehl, Glasfasern, Glaskugeln, Glaspulver, Gesteinsmehl, Hohlglaskugeln, Fasern, Siliciumcarbid, Siliciumnitrid, Pulver für die Keramikherstellung, Aluminiumtitanat, Molybdänsulfid, Zinksulfid, Zinkoxid, organische und/oder anorganische Pigmente, Metalloxide, Metallpulver, metallisierte Füllstoffe, Flugasche, Mikroballons, Titandioxid, Zemente, Magnesiumoxid, Magnesiumhydroxid, Bor und/oder Silicium handelt.

7. Feststoffe enthaltende Polymere gemäß Ansprüchen 1 bis 6, dadurch gekennzeichnet, daß es sich bei den Polymeren um Olefin- und Polyolefin-Homo- und -Copolymerisate, Polyvinylchloride, Ethylen-Vinylacetate-Polymere, Ethylen-Ethylacrylat-Polymere, Ethylen-Vinylchlorid-Polymere, Ethylen-Propylen-Polymere, fluorhaltige Polymere, Polyacetale, Polystyrole, Styrol-Copolymerisate, aromatische, aliphatische und/oder gemischte Polyester, Polyamide, Polyimide, Polyether, Polycarbonate, Polyurethane, Polyacrylate, Polyphenylenoxide, Polysulfide, Polypropylensulfide, Polysulfone, Celluloseester, Aminoplaste, Phenolharze, Epoxidharze und/oder Alkydharze und/oder Polymergemische, Blends, Copolymere, Propfpolymere und/oder statistische Mischpolymere aus zwei oder mehr dieser Polymertypen handelt.

8. Feststoffe enthaltende Polymere gemäß Ansprüchen 1 bis 7, dadurch gekennzeichnet, daß die Feststoffe eine mittlere Korngröße im Bereich von 0,0001 bis 1500 $\mu$ aufweisen.

9. Verfahren zur Modifizierung von Feststoffe enthaltenden Polymeren, dadurch gekennzeichnet, daß man zunächst 1 Mol eines oder mehrerer basischer Carbonsäureamide mit 0,1 bis 3 Molen Phosphor enthaltenden Estern aus der Gruppe der Ester der Orthophosphorsäure, Pyrophosphorsäuren, Metaphosphorsäure, Polyphosphorsäuren, Phosphinsäuren und Phosphonsäuren auf 80 bis 200 °C erhitzt, das dabei erhältliche Umsetzungsprodukt mit einem Feststoff zusammenbringt und den so behandelten Feststoff in einer Menge von 0,1 bis 99 Gew.-%, bezogen auf Füllstoffe und Zusätze enthaltendes Polymer, mit einem Polymer vermischt.

## Claims

1. Polymers containing solids, characterized in that they additionally contain reaction products of 1 mol of a basic carboxylic acid amide with 0.1 to 3 mol of an ester containing phosphorus, the esters containing phosphorus being esters of orthophosphoric acid, pyrophosphoric acids, metaphosphoric acid, polyphosphoric acids, phosphinic acids and/or phosphonic acids.

**2.** Polymers containing solids according to Claim 1, characterized in that the esters containing phosphorus are derived from straight-chain or branched alcohols having 1 to 18 C atoms and/or from aromatic, araliphatic and/or mixed aromatic-aliphatic alcohols having 6 to 18 C atoms.

**3.** Polymers containing solids according to Claims 1 and 2, characterized in that the basic carboxylic acid amides are those of monocarboxylic acids having 9 to 31 C atoms.

**4.** Polymers containing solids according to Claims 1 to 3, characterized in that the basic carboxylic acid amides are those which, in addition to one or more amide groups per molecule, also contain at least one primary, secondary and/or tertiary amino group.

**5.** Polymers containing solids according to Claims 1 to 4, characterized in that the basic carboxylic acid amides are derived from amines of the formula (I)

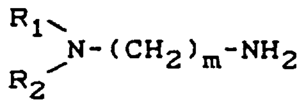

(I)

in which

$R_1$ and $R_2$ independently of one another represent an aliphatic alkyl radical having 1 to 8 C atoms or hydrogen and

m represents an integer from 0 to 6,

or from polyalkylenepolyamines of the formula (II) having at least one primary amino group

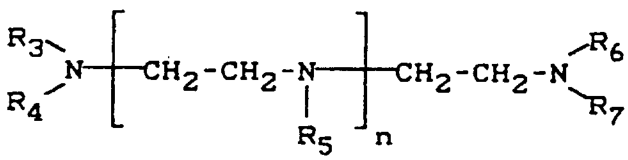

(II),

in which

$R_3$, $R_4$. $R_5$ $R_6$ and $R_7$ independently of one another each represent hydrogen, an optionally substituted aliphatic radical having 1 to 30 C atoms or an optionally substituted aromatic radical having 6 to 10 C atoms and

n represents zero or an integer from 1 to 50.

**6.** Polymers containing solids according to Claims 1 to 5, characterized in that the solids are carbonates, silicates, silicon dioxide, aluminium oxide, aluminium oxide trihydrate, carbon black, graphite, charcoal, nutshells, straw, fruit kernel or wood flour, glass fibres, glass beads, glass powder, rock powder, hollow glass beads, fibres, silicon carbide, silicon nitride, powders for the preparation of ceramics, aluminium titanate, molybdenum sulphide, zinc sulphide, zinc oxide, organic and/or inorganic pigments, metal oxides, metal powders, metallized fillers, fly ash, microbeads, titanium dioxide, cements, magnesium oxide, magnesium hydroxide, boron and/or silicon.

**7.** Polymers containing solids according to Claims 1 to 6, characterized in that the polymers are olefin and polyolefin homo- and copolymers, polyvinyl chlorides, ethylene/vinyl acetate polymers, ethylene/ethyl acrylate polymers, ethylene/vinyl chloride polymers, ethylene propylene polymers, fluorine-containing polymers, polyacetals, polystyrenes, styrene copolymers, aromatic, aliphatic and/or mixed polyesters, polyamides, polyimides, polyethers, polycarbonates, polyurethanes, polyacrylates, polyphenylene oxides, polysulphides, polypropylene sulphides, polysulphones, cellulose esters, amino resins, phenolic resins, epoxy resins and/or alkyd resins and/or polymer mixtures, blends, copolymers, graft polymers and/or random copolymers of two or more of these types of polymer.

**8.** Polymers containing solids according to Claims 1 to 7, characterized in that the solids have an average particle size in the range from 0.0001 to 1,500 $\mu$.

**9.** Process for modifying polymers containing solids, characterized in that 1 mol of one or more basic carboxylic acid amides is first heated at 80 to 200 ° C with 0.1 to 3 mol of esters containing phosphorus from the group comprising the esters of orthophosphoric acid, pyrophosphoric acids, metaphosphoric acid, polyphosphoric acids, phosphonic acids and phosphonic acids, the reaction product which can be obtained in this way is brought together with a solid and the solid thus treated is mixed in an amount of 0.1 to 99% by weight, based on the polymer containing fillers and additives, with a polymer.

**Revendications**

**1.** Polymères contenant des matières solides, caractérisés en ce qu'ils contiennent en outre des produits de réaction d'une mole de carboxamide basique avec 0,1 à 3 moles d'ester contenant du phosphore, les esters contenant du phosphore étant des esters d'acide orthophosphorique, d'acides pyrophosphoriques, d'acide méthaphosphorique, d'acides polyphosphoriques, d'acides phosphiniques et/ou d'acides phosphoniques.

**2.** Polymères contenant des matières solides suivant la revendication 1, caractérisés en ce que les esters contenant du phosphore sont dérivés d'alcools à chaîne droite ou ramifiés ayant 1 à 18 atomes de carbone et/ou d'alcools aromatiques, araliphatiques et/ou aliphatiques-aromatiques mixtes ayant 6 à 18 atomes de carbone.

**3.** Polymères contenant des matières solides suivant les revendications 1 et 2, caractérisés en ce que les carboxamides basiques sont des carboxamides d'acides monocarboxyliques ayant 9 à 31 atomes de carbone.

**4.** Polymères contenant des matières solides suivant les revendications 1 à 3, caractérisés en ce que les carboxamides basiques sont des carboxamides qui contiennent, à côté d'un ou plusieurs groupes amido par molécule, encore au moins un groupe amino primaire, secondaire et/ou tertiaire.

**5.** Polymères contenant des matières solides suivant les revendications 1 à 4, caractérisés en ce que les carboxamides basiques sont dérivés d'amines de formule (I)

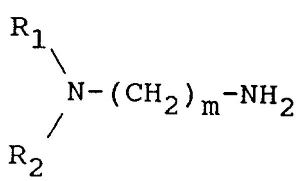

(I)

dans laquelle

$R^1$ et $R^2$ représentent, indépendamment l'un de l'autre, un reste alkyle aliphatique ayant 1 à 8 atomes de carbone ou de l'hydrogène et

m est un nombre entier de 0 à 6,

ou de polyalkylène-polyamines de formule (II) portant au moins un groupe amino primaire

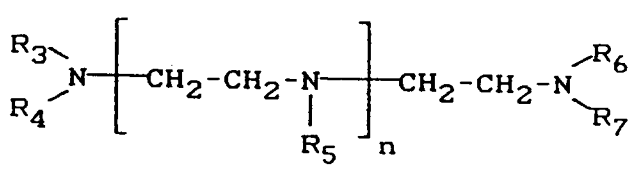

(II),

formule dans laquelle

$R_3$, $R_4$, $R_5$, $R_6$ et $R_7$ représentent, indépendamment les uns des autres, de l'hydrogène, un reste aliphatique éventuellement substitué ayant 1 à 30 atomes de carbone ou un reste aromatique éventuellement substitué ayant 6 à 10 atomes de carbone et

n est égal à 0 ou à un nombre entier de 1 à 50.

6. Polymères contenant des matières solides suivant les revendications 1 à 5, caractérisés en ce que les matières solides sont des carbonates, des silicates, du dioxyde de silicium, de l'oxyde d'aluminium, de l'oxyde d'aluminium trihydraté, du noir de fumée, du graphite, du charbon, de la poudre de coque de noix, de paille, de noyaux de fruit ou de bois, des fibres de verre, des sphères de verre, du verre en poudre, de la poudre minérale, des sphères creuses de verre, des fibres, du carbure de silicium, du nitrure de silicium, des poudres servant à la fabrication de matières céramiques, du titanate d'aluminium, du sulfure de molybdène, du sulfure de zinc, de l'oxyde de zinc, des pigments organiques et/ou inorganiques, des oxydes métalliques, des métaux en poudre, des charges métallisées, de la cendre volante, des sphères microscopiques, du dioxyde de titane, des ciments, de l'oxyde de magnésium, de l'hydroxyde de magnésium, du bore et/ou du silicium.

7. Polymères contenant des matières solides suivant les revendications 1 à 6, caractérisés en ce que les polymères sont des homopolymères et des copolymères oléfiniques et polyoléfiniques, des polymères de chlorure de vinyle, des polymères éthylène-acétate de vinyle, des polymères éthylène-acrylate d'éthyle, des polymères éthylène-chlorure de vinyle, des polymères éthylène-propylène, des polymères fluorés, des polyacétals, des polystyrènes, des copolymères de styrène, des polyesters aromatiques, aliphatiques et/ou mixtes, des polyamides, des polyimides, des polyéthers, des polycarbonates, des polyuréthannes, des polyacrylates, des polyphénylène-oxydes, des polysulfures, des polypropylènesulfures, des polysulfones, des esters de cellulose, des aminoplastes, des résines phénoliques, des résines époxyde et/ou des résines alkyd et/ou des mélanges de polymères, des polymères formulés, des copolymères, des polymères greffés et/ou des polymères mixtes statistiques de deux ou plus de deux de ces types de polymères.

8. Polymères contenant des matières solides suivant les revendications 1 à 7, caractérisés en ce que les matières solides présentent un diamètre moyen de grain compris dans la plage de 0,0001 à 1500 $\mu$m.

9. Procédé de modification de polymères contenant des matières solides, caractérisé en ce qu'on chauffe tout d'abord à 80-200°C une mole d'un ou plusieurs carboxamides basiques avec 0,1 à 3 moles d'esters contenant du phosphore, du groupe des esters de l'acide orthophosphorique, des acides pyrophosphoriques, de l'acide méthaphosphorique, des acides polyphosphoriques, des acides phosphiniques et des acides phosphoniques, on rassemble alors le produit réactionnel obtenu avec une matière solide et on mélange la matière solide ainsi traitée avec un polymère en une quantité de 0,1 à 99 % en poids, par rapport au polymère contenant des charges et des additifs.